# EUROPEAN PATENT APPLICATION

(11) **EP 2 575 199 A1**
(43) Date of publication of application: **03.04.2013**
(21) Application number: 12186053.0
(22) Date of filing: 26.09.2012
(51) Int. Cl.: H01M 4/58, H01M 10/0525, H01M 10/0569, H01M 4/02

(54) **Lithium-ion secondary battery**

(30) Priority: 30.09.2011 JP 2011216173
(71) Applicant: Fuji Jukogyo Kabushiki Kaisha, Tokyo 160-8316 (JP)
(72) Inventor: Baba, Ken, Tokyo, Tokyo 160-8316 (JP); Kiya, Yasuyuki, Tokyo, Tokyo 160-8316 (JP); Sakuraba, Takahito, Tokyo, Tokyo 160-8316 (JP)
(74) Representative: Sajda, Wolf E.

(57) **Abstract**

In a lithium ion secondary battery, lithium ions are reversibly adsorbed to and released from a negative electrode. A positive electrode includes lithium vanadium phosphate. A non-aqueous electrolytic solution includes fluorinated carbonate as a solvent.

## Description

### BACKGROUND OF THE INVENTION

### FIELD OF THE INVENTION

The present invention relates to a lithium ion secondary battery with superior lifespan characteristics, More specifically, the present invention relates to a lithium ion secondary battery that exhibits improved capacity maintenance capacity after use for a long period of time.

### RELATED ART

Recently, lithium ion electrical storage devices such as lithium ion secondary batteries are widely used for a variety of fields including electronic automobiles (such as EVs (electric vehicles), HEVs (hybrid electric vehicles) and the like) or mobile info-communication-related equipment.

In most lithium ion secondary batteries, lithium composite oxide such as LiCoO₂ is used as a positive electrode active material, and electrical storage devices with high capacity and long lifespan are thus realized.

However, these positive electrode active materials aggressively react with an electrolyte at a high temperature and a high electric potential states when abnormal phenomena occur, thus causing heating together with emission of oxygen and, in the worst case, the possibility of combustion is inevitable.

Recently, lithium ion secondary batteries using an olivine iron vanadium-containing compound as a positive electrode active material is suggested to inhibit reaction of an electrolytic solution, secure safety and, furthermore, obtain a high energy density (Patent Document 1: JP-A-2005-07 678 and Patent Document 2: JP-A-2010-186 689).
In these lithium ion secondary batteries, the positive electrode active material has a predetermined level or higher of theoretical capacity.
Furthermore, by using fluoroethylene carbonate (FEC) as an electrolyte solvent, a maximum charge voltage of 4.2 V can be applied and high energy density can be thus obtained.

In addition, a lithium ion secondary battery comprising a negative electrode containing a carbon material and an electrolytic solution containing FEC as an additive was developed (Patent Document 3: JP-A-2010-135 190). Patent Document 3 discloses that an increase in voltage after storage testing can be inhibited.

Meanwhile, Li₃V₂(PO₄)₃ attracts much attention as a positive electrode material with superior thermal stability. By using this material, a lithium ion secondary battery that has an operation voltage of 3.8 V based on Li/Li+ and a high theoretical capacity of 195 mAh/g, and exhibits a high capacity and superior safety can be obtained (Patent Document 4: JP-A-2001-500 665)

However, in accordance with improved performance and increased capacity of automobiles, electrical appliances and the like, non-aqueous electrolyte secondary batteries such as lithium ion secondary batteries require further improvement in characteristics, such as improvement in energy density (realization of high capacity), improvement in power density (realization of high power) and improvement in cycle characteristics (improvement in cycle lifespan), high safety and the like.

In accordance with Patent Documents 1 and 2, olivine iron vanadium has a theoretical capacity of about 150 to 160 mAh/g and a limitation of maximum operation voltage of 4.2 V, thus being inferior to Li₃V₂(PO₄)₃ in terms of high energy density.

In contrast, although Li₃V₂(PO₄)₃ is a positive electrode active material that can obtain a theoretical capacity of 195 mAh/g when charged and discharged at 4.6 V or higher (with respect to Li/Li⁺), deterioration in capacity is inevitably caused by repeated use at a high voltage. The reason for this is due to the fact that, since vanadium is eluted from Li₃V₂(PO₄)₃ and is precipitated on the negative electrode due to repeated use, Li₃V₂(PO₄)₃ cannot maintain its theoretical capacity.

### SUMMARY OF THE INVENTION

One or more embodiments provide a lithium ion secondary battery that can be charged and discharged with a high capacity even at a high voltage, improves a capacity maintenance ratio after repeated use, and exhibits superior cycle characteristics and power characteristics by using a positive electrode material containing lithium vanadium phosphate (LVP) as an active material.

### BRIEF DESCRIPTION OF THE DRAWINGS

- FIG. 1: is a cross-sectional view schematically illustrating an internal configuration of a lithium ion secondary battery according to one exemplary embodiments.
- FIG. 2: is a graph showing variation in capacity maintenance ratio after charge and discharge cycle testing, for lithium ion secondary batteries of examples and lithium ion secondary batteries of comparative examples.
- FIG. 3: is a graph showing increase ratios in internal resistance after charge and discharge cycle testing, for the lithium ion secondary batteries of the examples and the lithium ion secondary batteries of the comparative examples.
- FIG. 4: is a graph showing variation in capacity maintenance ratio with variation of discharge rate (C rate) during discharge, for the lithium ion secondary batteries of the examples and the lithium ion secondary batteries of the comparative examples.
- FIG. 5: is a graph showing variation in capacity maintenance ratio after charge and discharge cycle testing, for the lithium ion secondary batteries of the examples and the lithium ion secondary batteries of the comparative examples.

### DETAILED DESCRIPTION OF THE EMBODIMENTS

Hereinafter, embodiments of the present invention will be described in detail.
According to the embodiments, a lithium ion secondary battery is provided with a negative electrode that reversibly intercalates and deintercalates lithium ions, a positive electrode containing lithium vanadium phosphate, and a non-aqueous solution containing fluorinated carbonate as a solvent.

According to the embodiments, by using lithium vanadium phosphate as a positive electrode active material and fluorinated carbonate as a solvent of an electrolytic solution, a lithium ion battery with an operation voltage of 4.4 V or higher is realized. The term "operation voltage" herein means a maximum voltage (charge voltage) that bye applied.

In conventional lithium ion secondary batteries, when lithium vanadium phosphate is used as a positive electrode material active material, generally, an operation voltage is 3.8 V with respect to Li/Li+. That is, although lithium vanadium phosphate has an inherent large theoretical capacity, the operation voltage is limited, thus a discharge energy value is also limited. In addition, even when other active materials are used, an operation voltage is generally 4.2 V or lower.

When a high voltage is applied to a lithium ion secondary battery using lithium vanadium phosphate as a positive electrode active material, vanadium in the active material is eluted into the electrolytic solution and is precipitated on the negative electrode material. For this reason, when lithium ion secondary batteries are repeatedly used several times, their capacity maintenance ratio is gradually deteriorated and the lifespan of battery is inevitably shortened.

However, if the electrolytic solution contains fluorinated carbonate as a solvent, uniform films are formed on a surface of the negative electrode. Thereby, a current concentration is reduced and side reactions with the electrolytic solution on the surface of negative electrode can be inhibited. Accordingly, side reactions on the positive electrode are inhibited, and elution of vanadium to the electrolytic solution and the negative electrode from the positive electrode can be inhibited.
In addition, a film is formed using fluorinated carbonate on lithium vanadium phosphate on the positive electrode active material, thus preventing elation of vanadium from the positive electrode active material. For this reason, vanadium is not precipitated on the negative electrode and a voltage higher than 4.2 V, and in particular, a high voltage of 4.4 V or higher can be repeatedly applied to a lithium ion secondary battery comprising a positive electrode active material having a large theoretical capacity.
That is, a lithium ion secondary battery with a long lifespan in which capacity deterioration is inhibited as low as possible can be obtained. In addition, precipitation of vanadium on the negative electrode can be prevented, the risk of combustion during operation is also prevented and battery safety is improved.

### Positive electrode active material

According to the embodiments, lithium vanadium phosphate (LVP) is used as a positive electrode active material. In the embodiments, lithium vanadium phosphate means a material that is represented by Liₓ V_{2-y}My(PO₄)₂, wherein "M" is a metal element having an atom number of 11 or higher, for example, at least one selected from the group consisting of Fe, Co, Mn, Cu, Zn, Al, Sn, B, Ga, Cr, V, Ti, Mg, Ca, Sr, and Zr, and 1 ≤ x ≤ 3; 0 ≤ y < 2, and 2≤z≤5

According to the embodiments, a NASICON-type (Natrium Super Ion Conductor) lithium vanadium phosphate, is, Li₃V₂(PO₄)₃ is most preferably used.

NASICON-type lithium vanadium phosphate is a material that exhibits particularly superior charge and discharge capacity and charge and discharge cycle characteristics, thus directly contributing to large-capacity charge any discharge, and superior cycle characteristics of the lithium ion secondary battery. The used lithium vanadium phosphate can be in the form of particles. The particle diameter is not particularly limited.

In addition, according to the embodiments, Li₃V₂(PO₄)₃ should be surface-coated with conductive carbon due to low electrical conductivity. Accordingly, electrical conductivity of Li₃V₂(PO₄)₃ can be improved. The coating amount of conductive carbon is preferably 0.1 to 20 % by mass in terms of C atom.

### Preparation method of lithium vanadium phosphate

In the embodiments, lithium vanadium phosphate may be prepared by any method without particular limitation. For example, lithium vanadium phosphate may be prepared by a method including mixing a lithium source such as LiOH, or LiOH·H₂O, a vanadium source such as V₂O₅ or V₂O₃ and a phosphate source such as NH₄H₂PO₄ or (NH₄)₂HPO₄, followed by reacting and baking and the like. Li₃V₂(PO₄)₃ may be in the form of a particle conventionally obtained by grinding the baked substance or the like.

As described above, the particle sizes of lithium vanadium phosphate particles are not particularly limited and those having the desired particle size may be used. Since the particle size affects stability or density of Li₃V₂(PO₄)₃, the D₅₀ value in the particle size distribution of secondary particles of Li₃V₂(PO₄)₃ is preferably 0.5 µm to 25 µm.

When D₅₀ is lower than 0.5 µm, contact area with the electrolytic solution increases and stability of Li₃V₂(PO₄)₃ may be thus deteriorated, and when the D₅₀ exceeds 25 µm, power may be deteriorated due to deterioration in density. When D₅₀ falls within the range, storage battery devices with superior stability and higher power can be obtained.
In the particle size distribution of secondary particles of Li₃V₂(PO₄)₃, D₅₀ is more preferably 1 µm to 10 µm, particularly preferably 3 µm to 5 µm. Furthermore, in the particle size distribution of secondary particles, D₅₀ is a value measured using a particle size distribution meter based on a laser diffraction (light scattering) manner.

In addition, the conductive carbon coating may be performed by a well-known method. For example, the conductive carbon coating can be formed on the surface of Li₃V₂(PO₄)₃ by mixing conductive carbon with citric acid, ascorbic acid, polyethylene glycol, sucrose, methanol, propene, carbon black, Ketjen black or the like as a carbon coating material during reaction or baking in the production of Li₃V₂(PO₄)₃.

### Non-aqueous electrolytic solution

According to the embodiments, an electrolytic solution uses a general lithium salt as an electrolyte and is an electrolytic solution in which the electrolyte is dissolved in a solvent in that it does not cause electrolysis even at a high voltage and lithium ions can be stably present.

In the embodiments, the non-aqueous electrolytic solution essentially contains fluorinated carbonate as at least a part of the solvent. The ratio of fluorinated carbonate used is preferably 0.01 % by mass to 30 % by mass, particularly preferably 0.1 % by mass to 20 % by mass, based on 100 % by mass of the total mass of the electrolytic solution.

Specific examples of fluorinated carbonate include cis-difluoroethylene carbonate, trans-difluoroethylene carbonate, trifluoropropylene carbonate, allyl tris(2,2,2-trifluoroethyl)carbonate, fluoroethylene carbonate, or a mixture thereof. By using these substances, uniform and stable films can be formed on the negative electrode and positive electrode.

According to the embodiments, as far as the non-aqueous electrolytic solution contains fluorinated carbonate as at least a part of the solvent, there is no limitation about solvents or electrolytes. Examples of other materials that may be used as a solvent include chain carbonates such as dimethyl carbonate (DMC), diethyl carbonate (DEC), ethylmethyl carbonate (MEC), cyclic carbonates such as ethylene carbonate (EC), propylene carbonate (PC), butylene carbonate (BC) and vinylene carbonate (VC), and solvents having lower molecular weights such as acetonitrile (AN), 1,2-dimethoxyethane (DME), tetrahydrofuran (THF), 1,3-dioxolane (DOXL), dimethylsulfoxide (DMSO), sulfolane (SL), propionitrile (PN) or mixtures thereof. The solvent in the electrolytic solution of the embodiments may be preferably a chain or cyclic carbonate.

Examples of the electrolyte may include LiClO₄, LiAsF₆, LiBF₄, LiCF₃BF₃, LiPF₆, Li(C₂F₅)₃PF₃, LiB(C₆H₅)₄, CH₃SO₃Li, CF₃SO₃Li, (C₂F₅SO₂)₂NLi, (CF₃SO₂)₂NLi and mixtures thereof. These electrolytes may be used alone or in combination of two or more types. In the embodiments, LiPF₆ or LiBF₄ may be particularly preferably used.

The concentration of electrolyte in the non-aqueous electrolytic solution may be preferably 0.1 to 3.0 mol/L, more preferably, 0.5 to 2.0 mol/L.

The non-aqueous electrolytic solution may be a liquid state, a solid electrolyte or a polymer gel electrolyte in which a plasticizer or polymer is incorporated. According to the embodiments, since a non-aqueous electrolytic solution containing fluorinated carbonate as a solvent is used, a uniform and stable fluorinated carbonate film can be formed on the negative electrode and positive electrode, when a high voltage of 4.4 V or higher is applied to the lithium ion secondary battery.

For this reason, elution of vanadium from lithium vanadium phosphate to the electrolytic solution is prevented and inherent large electrical capacity of lithium vanadium phosphate can be maintained.
Furthermore, it is considered that the risk of problems such as elution of vanadium to the electrolytic solution and precipitation thereof on the negative electrode, and thus deterioration in capacity maintenance ratio of lithium ion secondary battery after repeated use, and combustion can be prevented.

As such, since elution of vanadium is prevented, continuous application of a high voltage is possible, and charge and discharge with high efficiency can be performed.
As a result, according to the embodiments, lithium ion secondary battery with superior long-term reliability can be obtained.

Hereinafter, embodiments of a lithium ion electrical storage device will be described with reference to the drawings.

### Electrical storage device

The lithium ion electrical storage device includes a positive electrode containing the positive electrode material, a negative electrode and a non-aqueous electrolytic solution.

Hereinafter, lithium ion secondary batteries will be described with reference to the drawings as exemplary embodiments of the electrical storage device.

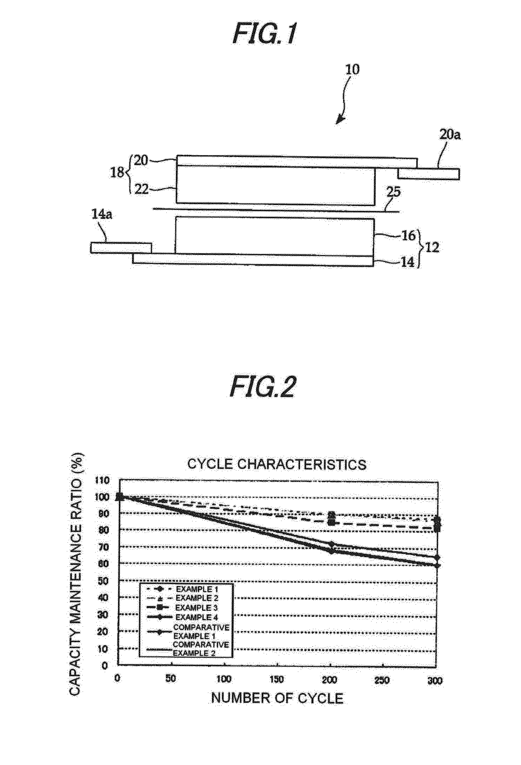

FIG. 1 is a schematic sectional view illustrating a lithium ion secondary battery 10 according to one exemplary embodiment. As shown in FIG. 1, the lithium ion secondary battery 10 has a structure in which a plate-shaped positive electrode 18 and a negative electrode 12 face each other via a separator 25.

The positive electrode 18 includes a positive electrode current collector 20 and a positive electrode mixture layer 22 containing a positive electrode active material of the above embodiments disposed on the positive electrode current collector 20. The negative electrode 12 includes a negative electrode current collector 14 and a negative electrode mixture layer 16 containing a negative electrode active material disposed on the negative electrode current collector 14.
The negative mixture layer 16 faces the positive mixture layer 16 via the separator 25. The positive electrode 18, the negative electrode 12, and the separator 25 are mounted in an exterior container (not shown) and the exterior container is filled with a non-aqueous electrolytic solution. Examples of the exterior container include battery cans, laminate films and the like.

In addition, the positive electrode current collector 20 and the negative electrode current collector 14 are optionally connected to leads for connections of exterior terminals (not shown).

The lithium ion secondary battery maintains a maximum charge and discharge capacity, and charge and discharge cycle characteristics obtained from the positive electrode active material, and thus has a long lifespan.
The positive electrode 18, the negative electrode 12 and the separator 25 according to the lithium ion electrical storage device will be described yin more detail.

### Positive electrode

The positive electrode, 18 of the embodiments comprises lithium vanadium phosphate as described above and other components may be produced using well-known materials. Specifically, production of the positive electrode will be described in detail below.

A positive electrode mixture layer 22 is formed by a process including applying a positive electrode slurry obtained by dispersing a mixture containing the positive electrode active material, a binder, a conductive agent in a solvent to a positive electrode current collector 20 and drying the applied substance.
After drying, pressing may be performed. As a result, the positive electrode mixture layer 22 is uniformly and firmly pressed on the collector. The positive electrode mixture layer 22 preferably has a thickness of 10 µm to 200 µm, preferably 20 µm to 100 µm.

The binder used for formation of the positive electrode mixture layer 22 is for example a fluorine-containing resin such as polyvinylidene fluoride, an acrylic binder, a rubber-based binder such as SBR, a thermoplastic resin such as polypropylene and polyethylene, carboxymethylcellulose or the like. The binder is preferably a fluorine-containing resin or a thermoplastic resin that is chemically and electrochemically stable with respect to non-aqueous electrolytic solution used in the storage battery devices of the embodiments, particularly preferably a fluorine-containing resin.
Examples of the fluorine-containing resin include polyvinylidene fluoride as well as polytetrafluoroethylene, vinylidene fluoride-trifluoroethylene copolymers, ethylene-tetrafluoroethylene copolymers and propylene-tetrafluoroethylene copolymers and the like. The content of the binder is preferably 0.5 to 20 % by mass with respect to the positive electrode active material.

The conductive agent used for formation of the positive electrode mixture layer 22 is for example conductive carbon such as carbon black (CB), a metal such as copper, iron, silver, nickel, palladium, gold, platinum, indium or tungsten, or conductive metal oxide such as indium oxide and tin oxide. The content of conductive material is preferably 1 to 30 % by mass with respect to the positive electrode active material.

The solvent used for the formation of the positive electrode mixture layer 22 may be water, isopropyl alcohol, N-methyl pyrrolidone, dimethylformamide or the like.

The surface of the positive electrode current collector 20 that contacts the positive electrode mixture layer 22 is a conductive base material having conductivity, and the positive electrode current collector 20 is for Example a conductive base material made of a conductive material such as metal, conductive metal oxide or conductive carbon, or a non-conductive base material coated with a conductive material.
The conductive material is preferably copper, gold, aluminum or an alloy thereof or conductive carbon. The positive electrode current collector 20 may be an expanded metal, a punched metal, a foil, a net, a foamed material or the like of the material. In cases of porous materials, the shape or number of through holes is not particularly limited and may be suitably determined so long as the movement of lithium ions is not inhibited.

In addition, in the embodiments, by adjusting a coating concentration of the positive electrode mixture layer 22 to 4 mg/cm² to 20 mg/cm², superior cycle characteristics can be obtained. When the coating concentration is lower than 4 mg/cm² and is higher than 20 mg/cm², cycle deterioration occurs. In addition, as the coating concentration increases, high capacity can be obtained. The coating concentration of the positive electrode mixture layer 22 is more preferably 10 mg/cm² to 20 mg/cm².
In addition, the term "coating concentration" herein used refers to a coating concentration of a positive electrode mixture layer 22 on the surface of one side of the positive electrode current collector 20. When the positive electrode mixture layer 22 is formed on both surfaces of the positive electrode current collector 20, the positive electrode mixture layer 22 present on one surface and the other surface is formed within the range defined above.

In addition, according to the embodiments, superior cycle characteristics can be obtained by adjusting a pore ratio of the positive electrode mixture layer 22 to 35 % to 65 %. When the pore ratio of the positive electrode mixture layer 22 is lower than 35 %, cycle deterioration occurs.
Although the pore ratio of the positive electrode mixture layer 22 exceeds 65 %, superior cycle characteristics can be maintained, but capacity or power is disadvantageously deteriorated. The pore ratio of the positive electrode mixture layer 22 is more preferably 40 % to 60 %.

### Negative electrode

The negative electrode, 12 of the embodiments comprises a carbon-based active material capable of intercalating and deintercalating lithium ions. For example, a negative electrode slurry obtained by dispersing a mixture containing this negative electrode active material and a binder in a solvent is applied to a negative electrode current collector 14, followed by drying to form a negative electrode mixture layer 16.

Furthermore, materials for the binder, the solvent and the current collector may be the same as in the aforementioned positive electrode.

The negative electrode active material is for example a lithium-based metal material, an inter-metal compound material of a metal and a lithium metal, a lithium compound, a lithium intercalation carbon material, a silicon-based material or the like.

Examples of lithium-based metal material include metal lithium and lithium alloys (for example, Li-Al alloys). The inter-metal material of the metal and the lithium metal is for example an inter-metal compound including tin, silicon or the like. The lithium compound is for example lithium nitride.

In addition, examples of the lithium intercalation carbon material include graphite, carbon-based materials such as hard carbon materials, polyacene materials and the like. The polyacene material is for example insoluble and unmeltable PAS having a polyacene skeleton.
Furthermore, these lithium intercalation carbon materials are substances that are capable of reversibly doping lithium ions. The negative electrode mixture layer 16 generally has a thickness of 10 to 200 µm, preferably 20 to 100 µm.

Examples of the carbon material include graphite and hard carbon,

Furthermore, examples of the silicon-based material include silicon and a composite material of silicon and carbon.

According to the embodiments, a carbon material, a lithium-based metal material, or a silicon-based material is preferably used as a negative electrode.

In addition, according to the embodiments, a coating concentration of the negative electrode mixture layer 16 is suitably designed based on the coating concentration of the positive electrode mixture layer 22. Commonly, the lithium ion secondary battery is designed such that the capacity (mAh) of the positive electrode is substantial equivalent to that of the negative electrode in terms of capacity balance or energy density of the positive negative electrode.
Accordingly, the concentration of the negative electrode mixture layer 16 is determined based on the type of the negative electrode active material, capacity of the positive electrode or the like.

### Separator

The separator used in the embodiments is not particularly limited and may be a well-known separator. For example, a porous material that exhibits durability to an electrolytic solution, a positive electrode active material and a negative electrode active material, has communication holes and has no electrical conductivity is preferably used. Examples of this porous material include woven fabrics, non-woven fabrics, synthetic resin microporous membranes, glass fibers and the like.
The synthetic resin microporous membrane is preferably used and a microporous membrane of polyolefin such as polyethylene or polypropylene is particularly preferably used, in terms of thickness, membrane strength and membrane resistance.

### EXAMPLES

Hereinafter, Examples will be described in more detail. (The present invention is not limited to the Examples.)

### Example 1

### (1) Production of positive electrode

92 % by mass of Li₃V₂(PO₄)₃ coated with carbon (1.4 % by mass in terms of C atom) as a positive electrode active material, 3 % by mass of Ketjen black as a conductive agent, and 5 % by mass of polyvinylidene fluoride (PVdF) as a binder were homogeneously mixed. 50 g of the resulting mixture was dispersed in 75 ml of N -methyl-2-pyrrolidone (NMP), to obtain a positive electrode mix coating solution.
The positive electrode mix coating solution thus obtained was uniformly applied to both surfaces of an aluminum foil having a thickness of 15 µm for the positive electrode current collector 20, followed by drying to form 15 mg/cm² of a positive electrode active material layer on each surface. The positive electrode active material layer was cut into a shape with a width of 24 mm and a length of 38 mm to produce a positive electrode, and a positive electrode lead was further bonded thereto.

### (2) Fabrication of negative electrode

95 % by mass of graphite as a negative electrode active material was homogeneously mixed with 5 % by mass of PVdF as a binder. 50 g of the mixture thus obtained was dispersed in 75 ml of NMP to obtain a negative electrode mix coating solution,
The negative electrode mix coating solution thus obtained was applied to both surfaces of a copper foil having a thickness of 15 µm for the negative electrode current collector, followed by drying to form 7 mg/cm² of a negative electrode active material layer on each surface. The negative electrode active material layer was cut into a shape with a width of 26 mm and a length of 40 mm to produce a negative electrode, and a negative electrode lead was further bonded thereto.

### (3) Preparation of electrolytic solution

28.2 % by mass of ethylene carbonate (EC), 27.9 % by mass of ethylmethyl carbonate (EMC), 30.5 % by mass of dimethylcarbonate (DMC), 1 % by mass of fluoroethylene carbonate (FEC), and 12.4 % by mass of hexafluorophosphate lithium (Li-PF₆) were added.

### (4) Fabrication of lithium ion secondary battery

The positive electrode negative electrode thus obtained were laminated via a separator made of a microporous polyethylene film having a thickness of 12 µm, and inserted into an exterior container made of an aluminum laminate film, followed by heat bonding to fabricate a laminate-type cell. Ig of the obtained electrolytic solution was injected into the laminate cell, and vacuum heat bonding was performed, followed by sealing to obtain a lithium ion secondary battery with different mini cell sizes of Example 1 (referred to as "Sample 1").

### Examples, 2 to 4

Lithium ion secondary batteries of Examples 2 to 4 (referred to as "Samples 2 to 4") were fabricated in the same manner as in Example 1 except that a ratio of the solvent and the solute was changed as described in Table 1 in the process of preparing the electrolytic solution.

### Comparative Examples 1 to 3

Lithium ion secondary batteries of Comparative Examples 1 to 3 (referred to as "Comparative Samples 1 to 3") were fabricated by repeating the same operations as in Example 1 except that a ratio of the solvent and the solute was changed as described in Table 1 in the process of preparing the electrolytic solution.

**Table 1**

| | EC | EMC | DMC | FEC | VC | LiPF₆ |
|---|---|---|---|---|---|---|
| Example 1 (Sample 1) | 28.2 | 27.9 | 30.5 | 1.0 | - | 12.4 |
| Example 1 (Sample 2) | 28.0 | 26.6 | 27.8 | 5.0 | - | 12.6 |
| Example 1 (Sample 3) | 5.0 | 25.6 | 27.3 | 30.0 | - | 12.2 |
| Example 1 (Sample 4) | 28.2 | 28.1 | 31.3 | 0,01 | - | 12.4 |
| Comparative Example 1 (Sample ) | 28.2 | 27.9 | 30.5 | - | 1.0 | 12.4 |
| Comparative Example 2 (Sample 2) | 28.2 | 28.1 | 31.3 | 0.005 | - | 12.4 |
| Comparative Example 3 (Sample 3) | 5.0 | 20.8 | 22.3 | 40.4 | - | 11.8 |

### Performance evaluation

### (1) Evaluation using cycle testing

Samples 1 to 4 and Comparative Samples 1 to 3 were charged at a constant current of 0.7 C up to a battery voltage of 4.6 V at room temperature (20 °C), continuously charged at a constant voltage of 4.2 V, and discharged at a constant current of 0.7 C up to a battery voltage of 2.5 V. Under these conditions, 300 cycles were repeated.

### (1-1) Capacity maintenance ratio/charge transfer resistance

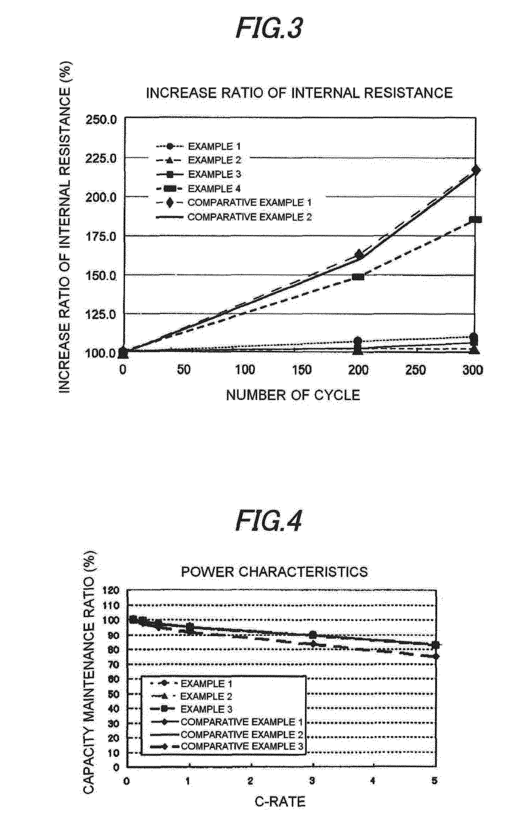

With respect to the respective Samples, at a predetermined cycle, discharge capacity maintenance ratios and an increase ratio of charge transfer resistance were measured. The capacity maintenance ratio is shown in FIG. 2 and an increase ratio of charge transfer resistance is shown in FIG. 3.

Furthermore, charge and discharge capacities of respective samples were measured using a charge and discharge tester (produced by Toyosystem Corporation). The charge transfer resistance was measured using an electrochemical analyzer (produced by Hokuto Denko Corporation). The measurement of charge transfer resistance was carried out by charging the Samples 1 to 4 and Comparative Samples 1 to 3 at 100 % SOC, that is, full-charging.
An alternating impedance was measured at an applied voltage of 4.6 V and at a frequency range of 0.1 Hz to 100 kHz using an impedance meter. Accordingly, an increase ratio of charge transfer resistance (bulk resistance) was obtained. The discharge capacity maintenance ratio (FIG. 2) and an increase ratio of internal resistance (FIG. 3) of respective values after 300 cycles at 100 % are shown in Table 2.

**Table 2**

| | Discharge capacity Maintenance ratio % | Charge transfer resistance increase ratio % |
|---|---|---|
| Example 1 | 87.00 | 110 |
| Example 2 | 86.00 | 103 |
| Example 3 | 82.00 | 106 |
| Example 4 | 65.00 | 185 |
| Comparative Example 1 | 60.00 | 217 |
| Comparative Example 2 | 60.50 | 215 |

### (1-2) Test of determination of vanadium amount: amount of vanadium eluted from electrolytic solution

Three of the Samples 1 to 4 and Comparative Samples 1 to 3 were subjected to cycle testing. After 100, 200 and 300 cycles, batteries were disassembled, the electrolytic solution was collected and a vanadium amount (ppm) thereof was measured using an ICP (Induced coupled plasma) mass analyzer (produced by Seiko Electric Co., Ltd.). The results are shown it Table 3.

**Table 3**

| Vanadium amout of electrolytic solution | Number of cycles | | | |
|---|---|---|---|---|
| | 0 | 100 | 200 | 300 |
| Example 1 | 0 ppm | 0 ppm | 1 ppm | 1 ppm |
| Example 2 | 0 ppm | 0 ppm | 0 ppm | 1 ppm |
| Example 3 | 0 ppm | 0 ppm | 0 ppm | 1 ppm |
| Comparative Example 1 | 0 ppm | 20 ppm | 40 ppm | 45 ppm |
| Comparative Example 2 | 0 ppm | 20 ppm | 38ppm | 45 ppm |

### (1-3) Test of determination of vanadium amount: vanadium amount of negative electrode

As described above, one piece of negative electrode was collected from each of the Samples 1 to 4 and Comparative Samples 1 to 3, were charged and discharged 100, 200 and 300 cycles, and washed with dimethyl carbonate, followed by vacuum drying.

The material present on the surface of the negative electrode was removed with a medicine spoon, heated under stirring at 80 °C in an 50 % aqueous sulfuric acid and filtered, and the amount of vanadium in the negative electrode (ppm) was measured using an ICP (induced coupled plasma) mass analyzer (produced by Seiko Electric Co., Ltd.). The measurement results are shown in Table 4.

**Table 4**

| Vanadium amount of electrode | Number of cycles | | | |
|---|---|---|---|---|
| | 0 | 100 | 200 | 300 |
| Example 1 | 0 ppm | 100 ppm | 462 ppm | 600 ppm |
| Example 2 | 0 ppm | 80 ppm | 310 ppm | 440 ppm |
| Example 3 | 0 ppm | 89ppm | 270 ppm | 470 ppm |
| Comparative Example 1 | 0 ppm | 1903ppm | 3468ppm | 4009ppm |
| Comparative Examples 2 | 0 ppm | 1909 ppm | 3201 ppm | 3959 ppm |

### (2) Evaluation of power characteristics (rate characteristics)

The Samples 1 to 3 and Comparative Samples 1 to 3 were charged at 100 % (SOC100), and the initial discharge capacity (mAh/g active material) of each active material was measured at 25 °C under the condition of 0.1 C discharge.
In addition, discharge capacity (mAh/g active material) was measured while elevating a discharge rate to 0.2 C, 0.5 C, 1.0 C and 2.0 C. Also, a ratio of a capacity after 0.2 C, 0.5 C, 1.0 C, 3.0 C or 5.0 C discharge to a capacity after 0.1 C discharge expressed as a percentage was defined as a capacity maintenance ratio and each value is shown in the graph of FIG. 4 for evaluation of power characteristics.
Also, capacity maintenance ratio at 5.0 C of respective samples is shown in the following Table 5.

**Table 5**

| Capacity maintenance ratio at 5.0 C | |
|---|---|
| Sample 1 | 83.2 |
| Sample 2 | 83.5 |
| sample 3 | 82.6 |
| Comparative Sample 1 | 83.0 |
| Comparative Sample 2 | 83.0 |
| Comparative Sample 3 | 75.0 |

Capacity maintenance ratios (C values) were measured at a discharge temperature of 20°C and at discharge rates of 0.25 C, 0.5 C, 1 C, 2 C, 3 C and 4 C.

Here, 1 C a current at which discharge of a cell having nominal capacity at a constant current is finished within one hour, and 0.25 C meons a current at which discharge of a cell having nominal capacity at a constant current is finished within four hours. Generally, as discharge rate increases, voltage drop is caused by internal resistance of cell and battery voltage is decreased.

### (3) Observation of capacity maintenance ratio with variation of voltage

The Sample 1 and Comparative Sample 1 were charged at a constant current of 0.7 C up to a battery voltage of 4.2 V at room temperature (20 °C), continuously charged at a constant voltage of 4.2 V and discharged at a constant current of 0.7 C down to a battery voltage of 2.5 V. Under these conditions, 300 cycles were repeated.

That is, charge and discharge cycles were performed except that, in the aforementioned cycle testing, the charge final voltage was decreased from 4.6 V to 4.2 V.
A discharge capacity maintenance ratio after 300 cycles in a case where an initial discharge capacity was 100 % was 89.5 % for sample 1, and was 93 % for Comparative Sample 1.

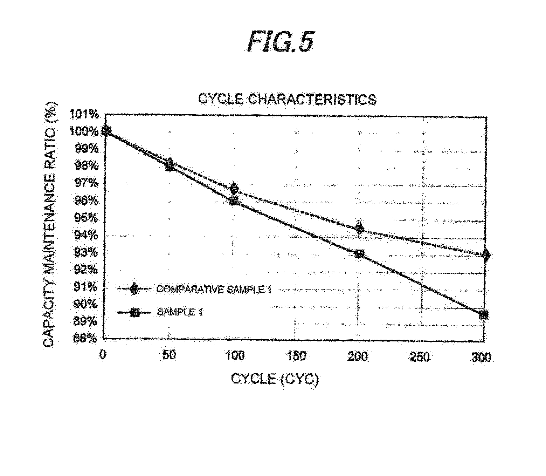

Variations in capacity maintenance ratio at respective cycles are shown in FIG. 5.

Generally, lithium ion secondary batteries using lithium vanadium phosphate exhibit considerable capacity deterioration at high voltages. That is, it is thought that, commonly, in a case in which a voltage of 4.6 V is applied, vanadium is generally readily eluted, as compared to a case in which a voltage of 4.2 V is applied, thus causing deterioration in cycle characteristics.
However, as can be seen through comparison in different voltages between Sample 1 of the present invention and Comparative Sample 1, the sample of the present invention, to which a high voltage is applied, exhibited improved cycle was compared to the sample to which a low voltage is applied.

Comparing FIG. 2 with FIG. 5, as the number of cycle increases, in the lithium ion secondary battery of the present invention, deterioration in capacity maintenance ratio is inhibited and long-term reliability can be thus secured, in particular, when a high voltage is applied.

Furthermore, the present invention is not limited to the aforementioned embodiments, but various modifications are possible within the scope of the subject matters of the invention.

In accordance with the embodiments and examples, a lithium ion secondary battery may include: a negative electrode in which lithium ions are reversibly absorbed thereto and released therefrom; a positive electrode including lithium vanadium phosphate; and a non-aqueous electrolytic solution including fluorinated carbonate as a solvent.

According to the lithium ion secondary battery of the embodiments and examples, since the fluorinated carbonate in the non-aqueous electrolytic solution forms films on the negative electrode and the positive electrode, the vanadium in the lithium vanadium phosphate of the positive electrode is prevented from being eluted to the electrolytic solution.
In addition, since the elution of the vanadium to the electrolytic solution is suppressed, a deposition of the eluted vanadium on the negative electrode is also suppressed. As a result, the lithium ion secondary battery exhibits improved capacity maintenance ratio after cycle testing.

The lithium ion secondary battery may have an operation voltage higher than 4.2 V and, in particular, an operation voltage of 4.4 V or higher.

Since the lithium ion secondary battery of the embodiments operates at a high voltage higher than 4.2 V, in particular, an operation voltage of 4.4 V or higher, availability of a high energy density and large discharge energy that can be obtained from lithium vanadium phosphate of the positive electrode material is maximized. For all this, cycle characteristics are improved and lifespan of batteries is thus lengthened.

According to the embodiments and examples, the fluorinated carbonate may be cis-difluoroethylene carbonate, trans-difluoroethylene carbonate, trifluoropropylene carbonate, allyl tris(2,2,2-trifluoroethyl)carbonate or fluoroethylene carbonate, or a mixture thereof.

In the lithium ion secondary battery of the embodiments, when any one of aforementioned materials is used as fluorinated carbonate in an electrolytic solution, the film is readily formed on the positive and negative electrodes. Among them, fluoroethylene carbonate may be particularly preferred.

According to the embodiments and examples, the lithium vanadium phosphate may be materials represented by LiₓV_{2-y}M_{y}(PO₄)z, in which "M" is a metal element having an atom number of 11 or higher, wherein 1 ≤ x ≤ 3; 0 ≤ y < 2, and 2 ≤ z ≤ 3.

These materials have a large theoretical capacity and can secure a predetermined capacity maintenance ratio even after cycle testing, thus being preferably used as positive electrode materials. Further, Li₃V₂(PO₄)₃ may be particularly preferably used.

According to the embodiments and examples, the content of fluorinated carbonate may be preferably 0.01 % by mass to 30 % by mass, based on 100 % by mass of a total mass of the electrolytic solution.

When the content of fluorinated carbonate exceeds 30 % by mass, based on 100 % by mass of the total mass of the electrolytic solution, power characteristics are deteriorated, and when the content is lower than 0.01 %, an increase in internal resistance cannot be inhibited.

According to the embodiments and examples, the lithium ion secondary battery may include a negative electrode that reversibly intercalates and deintercalates lithium ions, a positive electrode containing lithium vanadium phosphate, and a non-aqueous electrolytic solution containing fluorinated carbonate as a solvent.
According to this configuration, since a voltage higher than 4.2 V, and in particular, a high voltage of 4.4 V or higher can be applied to the lithium ion secondary battery, a charged and discharge at a large capacity can be realized, and a deterioration in capacity is not occurred even by a repeatedly use. That is, improved cycle characteristics and capacity maintenance ratio and long lifespan of the lithium ion secondary battery can be realized.

### List of Reference Signs

- 10: = secondary battery
- 12: = negative electrode
- 14: = negative electrode current collector
- 16: = negative mixture layer
- 18: = positive electrode
- 20: = positive electrode current collector
- 22: = positive electrode mixture layer
- 25: = separator

## Claims

1. A lithium ion secondary battery comprising:
- a negative electrode in which lithium ions are reversibly absorbed thereto and released therefrom;
- a positive electrode including lithium vanadium phosphate; and
- a non-aqueous electrolytic solution including fluorinated carbonate as a solvent.

2. The battery according to claim 1,
wherein the operation voltage is 4.4 V or higher.

3. The battery according to claim 1 or 2,
wherein the fluorinated carbonate comprises cis-difluoroethylene carbonate, trans-difluoroethylene carbonate, trifluoropropylene carbonate, allyl tris(2,2,2-trifluoroethyl)carbonate or fluoroethylene carbonate, or a mixture thereof.

4. The battery according to any of claims 1 to 3,
wherein the fluorinated carbonate comprises fluoroethylene carbonate.

5. The battery according to any one of claims 1 to 4,
wherein the lithium vanadium phosphate is represented by LiₓV_{2-y}M_{y}(PO₄)_{z}, wherein "M" is a metal element having an atom number of 11 or higher,
wherein 1 ≤ x ≤ 3; 0 ≤ y ≤ 2, and 2 ≤ z ≤ 3.

6. The battery according to any of claims 1 to 5,
wherein the lithium vanadium phosphate comprises Li₃V₂(PO₄)₃.

7. The battery according to any one of claims 1 to 6,
wherein the content of the fluorinated carbonate is 0.01 % by mass to 30 % by mass, with respect to 100 % by mass of the total mass of the electrolytic solution.
